# EUROPEAN PATENT APPLICATION

(11) **EP 4 446 231 A1**
(43) Date of publication of application: **16.10.2024**
(21) Application number: 24168553.6
(22) Date of filing: 04.04.2024
(51) Int. Cl.: B64D 29/08, B64D 29/00, B64D 45/00, F02C 7/25

(54) **FIREPROOF SIGHT GLASS WINDOW FOR ENGINE NACELLE**

(30) Priority: 11.04.2023 US 202318133367
(71) Applicant: Spirit AeroSystems, Inc., Wichita, KS 67278 (US)
(72) Inventor: BADEN, Pete E., Wichita, 67278 (US); STERNBERGER, Joe E., Wichita, 67278 (US)
(74) Representative: HGF

(57) **Abstract**

A sight-viewing structure for an engine nacelle (10), including a sight glass (24) that is translucent or semi-translucent, a mounting frame (26), and a flame shield (28). The sight glass (24) allows checking of oil levels of an aircraft engine accessory gearbox within the nacelle (10) without doors and springs that can be more susceptible to fail fire testing. The mounting frame (26) has an outer side, an inner side opposite the outer side, and a frame opening (30) formed through the mounting frame (26). The frame opening (30) is covered by the sight glass (24), and the mounting frame (26) is configured for attachment to an inner surface of the engine nacelle (10) at a location with a hole (22) through the engine nacelle (10), such that the sight glass (24) can be viewed through the hole (22). A flame shield (28) may be made of composite materials and covers the inner side of the mounting frame (26) and peripheral edge regions of the sight glass (24).

## Description

### BACKGROUND

An aircraft engine nacelle generally surrounds an aircraft engine and fan, among other components associated therewith. The nacelle can include an inlet cowl, a fan cowl, and a thrust reverser. The inlet cowl encircles an area forward of the fan, the fan cowl surrounds and covers the fan, and the thrust reverser generally surrounds and covers a core of the engine.

Small access doors are typically required on nacelles for various types of access requirements, such as viewing access for a mechanic to check the oil level of the engine accessory drive gearbox without opening the fan cowls or fan cowl doors. These access doors on the fan cowl are typically spring-loaded to automatically return to the closed position via return spring force. Depending on the specific location of the access doors on the fan cowl, such doors are required to be fireproof for fire safety reasons. Recent interpretations of airworthiness regulations have made it increasingly difficult to pass fire tests on these small access doors. One mode of failure is the spring losing its temper in the fire exposure which allows the door to open and the flames to pass through. Furthermore, standard heat blanket insulation protection of a small door can be complex and impractical.

Thus there is a need for improved methods and apparatuses for a mechanic to check items within the nacelle that does not suffer from these and other disadvantages.

### SUMMARY

In one or more embodiments of the invention, a sight-viewing structure for an engine nacelle includes a sight glass that is translucent or semi-translucent, a mounting frame, and a flame shield. The mounting frame has an outer side, an inner side opposite the outer side, and a frame opening formed through the mounting frame. The frame opening is covered by the sight glass, and the mounting frame is configured for attachment to an inner surface of an engine nacelle at a location with a hole through the engine nacelle, such that the sight glass can be viewed through the hole. A flame shield covers the inner side of the mounting frame and partially covers peripheral edge regions of the sight glass. The flame shield also has a flame shield opening formed therethrough at a region overlapping the sight glass. This allows viewing of items such as oil levels within the nacelle without doors and springs that can be more susceptible to fail fire testing requirements.

In another embodiment, an engine nacelle includes a nacelle panel with an outer surface, an inner surface, and a hole formed therethrough, as well as a sight glass, a mounting frame, and a flame shield. The sight glass is translucent or semi-translucent and has peripheral edge regions. The mounting frame has an outer side, an inner side opposite the outer side, and a frame opening formed through the mounting frame. The sight glass is retained within the mounting frame, which is attached to the inner surface of the nacelle panel at a location such that the sight glass is viewable through the hole. The flame shield covers the inner side of the mounting frame and partially covers the peripheral edge regions of the sight glass, with a flame shield opening formed through the flame shield at a region overlapping the sight glass.

In yet another embodiment, a method for manufacturing a fan cowl with a sight-viewing structure provides a line of sight from outside of the fan cowl into the fan cowl to check oil levels of an aircraft engine accessory gearbox without opening the fan cowl. The method includes the steps of placing a sight glass that is translucent or semi-translucent into a frame opening of a mounting frame, and attaching a flame shield over an inner side of the mounting frame and partially covering peripheral edge regions of the sight glass. Furthermore, the method includes attaching the mounting frame to an inner surface of a panel of the fan cowl, with the sight glass aligned with a hole formed through the panel and an outer side of the mounting frame abutting the inner surface of the panel.

This summary is intended to introduce a selection of concepts in a simplified form that are further described in the detailed description below. This summary is not intended to identify key features or essential features of the claimed subject matter, nor is it intended to be used to limit the scope of the claimed subject matter. Other aspects and advantages of the present invention will be apparent from the following detailed description of the embodiments and the accompanying drawing figures.

### BRIEF DESCRIPTION OF THE DRAWING FIGURES

Embodiments of the present invention are described in more detail below with reference to the attached drawing figures, wherein:
FIG. 1 is a side elevation perspective view of an engine nacelle and its fan cowl, in accordance with embodiments of the present invention;
FIG. 2 is a bottom view of a lower fan cowl of the nacelle of FIG. 1, in accordance with embodiments of the present invention;
FIG. 3 is a fragmentary side elevation view of an inner side of a fan cowl panel of the lower fan cowl of FIG. 2 with a sight viewing structure without a flame shield, a gasket, and a sight glass, in accordance with embodiments of the present invention;
FIG. 4 is a cross-sectional side view of the fan cowl panel and the sight viewing structure of FIG. 3 taken along line 4-4 and additionally including the flame shield, a solid retainer, and a gasket, in accordance with embodiments of the present invention; and
FIG. 5 is a flow chart of a method for manufacturing a fan cowl with a sight-viewing structure, in accordance with embodiments of the present invention.

The drawing figures do not limit the present invention to the specific embodiments disclosed and described herein. The drawings are not necessarily to scale, emphasis instead being placed upon clearly illustrating the principles of the invention.

### DETAILED DESCRIPTION

The following detailed description of embodiments of the invention references the accompanying drawings. The embodiments are intended to describe aspects of the invention in sufficient detail to enable those skilled in the art to practice the invention. Other embodiments can be utilized, and changes can be made, without departing from the scope of the claims. The following detailed description is, therefore, not to be taken in a limiting sense. The scope of the present invention is defined only by the appended claims, along with the full scope of equivalents to which such claims are entitled.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments but is not necessarily included. Thus, the present technology can include a variety of combinations and/or integrations of the embodiments described herein.

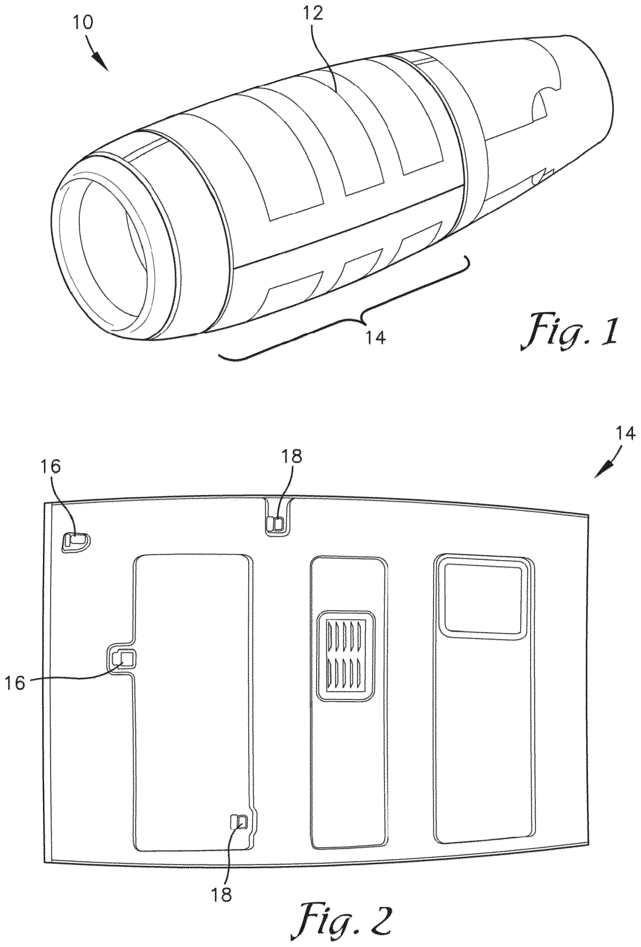

FIG. 1 depicts an engine nacelle 10 of an aircraft, including a fan cowl 12. The engine nacelle 10 may have any configuration known in the art and may have an aircraft engine and an aircraft fan (not shown) located therein. Furthermore, FIG. 2 depicts a lower fan cowl 14 of the fan cowl 12 of FIG. 1, including various lockout or access doors 16 (e.g., an SAV remote lockout access door and an NAI remote lockout access door) and two sight-viewing structures 18, through which oil levels within the nacelle 10 (e.g., oil levels of the aircraft engine accessory gearbox) can be viewed without doors and springs that can be more susceptible to fail fire testing requirements. Although two are shown, note that one or more than two sight-viewing structures 18 may be used without departing from the scope of the technology described herein.

Such testing requirements may be outlined by the Society of Automotive Engineers (SAE), the International Organization for Standardization (ISO) (e.g., ISO 2685), the Federal Aviation Administration (FAA), European Aviation Safety Agnecy (EASA) and/or other regulatory agencies. For example, the sight-viewing structure 18 or at least one component thereof may be configured for withstanding a temperature of 2,000-degrees F for at least 15 minutes in order to pass such fire tests.

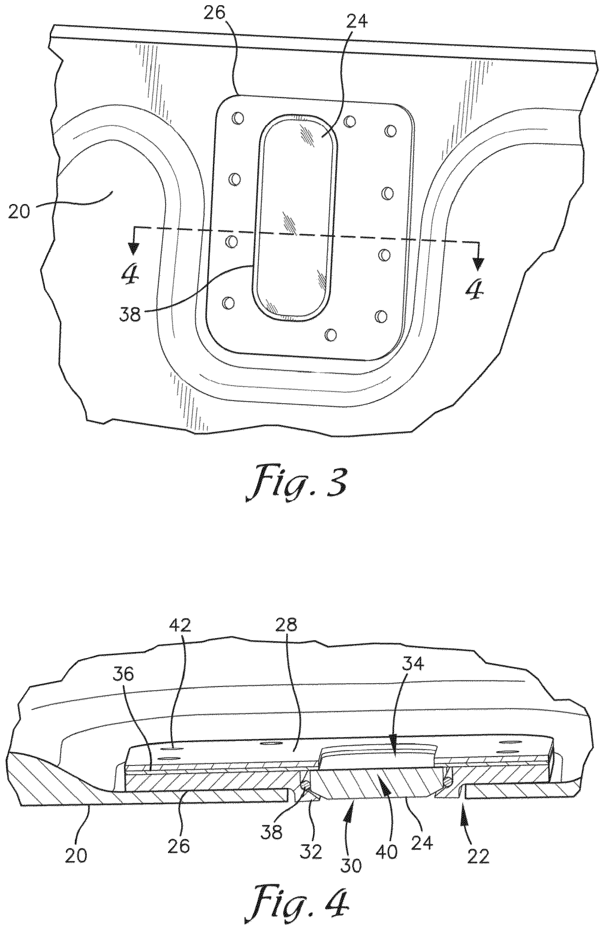

In one or more embodiments, as depicted in FIGS. 3-4, a fan cowl panel 20 of the fan cowl 12 can have the sight-viewing structure 18 attached thereto and aligned or at least partially positioned through a hole 22 in the panel 20. The panel 20 can have an inner surface facing inward relative to the nacelle 10 (e.g., toward the fan and/or engine) and an outer surface opposite the inner surface and facing outward relative to the nacelle 10.

The sight-viewing structure 18 includes a sight glass 24 that is translucent or semi-translucent, a mounting frame 26, and a flame shield 28. The sight glass 24 can be made of fused silica glass (e.g. PYREX by Corning Inc. of Corning, New York), plexiglass, stretched acrylic glass, borosilicate glass, or other types of rigid translucent or semi-translucent material. The thickness, area, and shape selected for the sight glass 24 may vary depending on the material used for the sight glass and various thermal and structural considerations. As depicted in FIG. 3, the sight glass can be, for example, an oblong shape, such as a rectangular shape with rounded off corners. However, other shapes and dimensions can be used without departing from the scope of the technology described herein. Furthermore, as depicted in FIG. 4, one or more embodiments can include a tapering of the sight glass from a surface or inner-most region of the sight glass located within the nacelle 10 to a surface facing outward relative to the nacelle 10, particularly for providing a fitting that is flush with the outer surface of the panel 20 and/or the nacelle 10.

The mounting frame 26 has an outer side, an inner side opposite the outer side, and a frame opening 30 formed through the mounting frame 26. The frame opening 30 is covered by the sight glass 24, and the mounting frame 26 is configured for attachment to the inner surface of the panel 20 and/or the nacelle 10 at a location with the hole 22, such that the sight glass 24 can be viewed through the hole 22. The mounting frame 26 can be made of steel, titanium, composite, or other such fireproof materials used in the art of aerospace components. In one or more embodiments, the mounting frame 26 includes a retaining ledge 32 or retaining protrusions at the outer side of the mounting frame 26. The retaining ledge 32 or retaining protrusions may be sized and configured around the frame opening 30 in a configuration to prevent the sight glass 24 from slipping through the frame opening 30. For example, as depicted in FIG. 4, the retaining ledge 32 slopes inward relative to the frame opening 30, narrowing the frame opening at a location substantially flush with the outer surface of the panel 20. This likewise allows the sight glass 24 to rest flush or substantially flush with the outer surface of the panel 20 and/or the nacelle 10.

The flame shield 28 covers the inner side of the mounting frame 26 and partially covers peripheral edge regions of the sight glass 24. The flame shield also has a flame shield opening 34 formed therethrough at a region (e.g. peripheral edge regions) overlapping the sight glass 24. In some embodiments, the flame shield is a composite panel made of two or more, three or more, or five or more composite plies consolidated into a composite laminate. The composite panel may, for example, be formed of carbon fibers, fiberglass fibers, or ceramic fibers. However, other flame shield material can be used without departing from the scope of the technology herein. The flame shield may be configured with sufficient layers of heat shielding and/or composite material to allow for the sight-viewing structure 18 to withstand required aerospace fire testing. Such testing requirements may be found outlined by the Society of Automotive Engineers (SAE), the International Organization for Standardization (ISO) (e.g., ISO 2685), the Federal Aviation Administration (FAA), European Aviation Safety Agnecy (EASA) and/or other regulatory agencies. For example, the sight-viewing structure 18 and/or its flame shield 28 may be configured for withstanding a temperature of 2,000-degrees F for at least 15 minutes in order to pass such fire tests. However, other the flame shield 28 can be configured to withstand other heat limits without departing from the scope of the technology described herein.

In one or more embodiments, the sight-viewing structure 18 can further include a retainer 36 and/or a gasket 38. The retainer 36 may be made of a rigid material such as steel, titanium, composite, or other such fireproof materials used in the art of aerospace components. The retainer 36 may be located between the mounting frame 26 and the flame shield 28. The retainer 36 may be a rigid layer of material configured on the inner side of the mounting frame 26 to prevent the sight glass 24 from slipping through the flame shield opening 34 on the inside of the nacelle 10. That is, the retainer 36 may be sized and located similarly to the flame shield 28, in order to overlap the peripheral regions of the sight glass 24. Specifically, the retainer 36 may have a retainer opening 40 with the same area and shape as the flame shield opening 34. However, in alternative embodiments, the flame shield 28 is configured to serve as both the flame shield and the retainer, with the retainer 36 being omitted.

The gasket 38 may be located within the frame opening 30 and around edges of the sight glass 24. For example, as depicted in FIG. 4, the gasket 38 may be located between the mounting frame 26 and the retainer 36 and/or between the mounting frame 26 and the flame shield 28. That gasket 38 may be made of rubber or may be, for example, a silicone O-ring (e.g., an M83461/1-144 Silicone O-Ring). However, other standard O-rings or gaskets known in the art may be used without departing from the scope of the technology herein. The gasket 38 may center the sight glass 24 within the frame opening 30 of the mounting frame 26 and provide dampening for the sight glass 24 during instances of high vibration.

As depicted in FIG. 4, to secure the flame shield 28, the retainer 36, and/or the mounting frame 26 to the panel 20, one or more aligned fastener holes 42 may be formed through each of the flame shield 28, the retainer 36, and/or the mounting frame 26. Any fasteners known in the art can then be inserted through and secured within the aligned fastener holes. In some embodiments of the invention, the fasteners can comprise fire-shielding or heat-resistant materials on an end adjacent to the flame shield 28. However, in other embodiments, the fasteners can be made of any other fasteners known in the art.

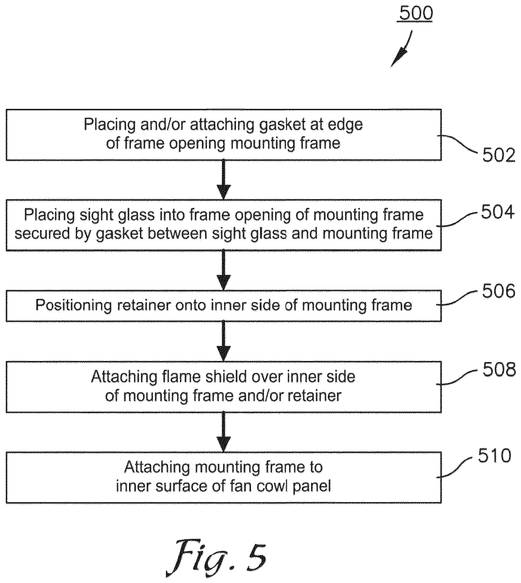

The flow chart of FIG. 5 depicts in more detail the steps of an exemplary method 500 for manufacturing a fan cowl (e.g., the fan cowl 12) of a nacelle (e.g., the nacelle 10) with a sight-viewing structure is depicted in FIG. 5 for providing a line of sight from outside of the fan cowl 12 into the fan cowl 12 to check oil levels of an aircraft engine accessory gearbox, for example, without opening the fan cowl 12. In some embodiments of the invention, various steps may be omitted and/or steps may occur out of the order depicted in FIG. 5 without departing from the scope of the invention. For example, two blocks shown in succession in FIG. 5 may in fact be executed substantially concurrently, or blocks may sometimes be executed in the reverse order depending upon the functionality involved.

The method 500 may include placing and/or attaching a gasket (e.g., the gasket 38) around peripheral edges or edge regions of the frame opening 30 of the mounting frame 26, as depicted in block 502, and placing the sight glass 24 that is translucent or semi-translucent into the frame opening 30 of the mounting frame 26, as depicted in block 504, such that the gasket 38 is between the sight glass 24 and an edge or perimeter of the frame opening 30 formed through the mounting frame 26. Specifically, the gasket 38 may be located within the frame opening 30 and around edges of the sight glass 24, such that the gasket 38 is located between the mounting frame 26 and the flame shield 28. The sight glass 24 can be dropped into a cavity or opening of the mounting frame 26 (e.g., the frame opening 30) sized and shaped to retain the sight glass 24 from slipping through a front of the frame opening 30 on the outer side of the mounting frame 26. Specifically, in one or more embodiments, the retaining ledge 32 or retaining protrusions at the outer side of the mounting frame 26 may be sized and configured around and/or extending into the frame opening 30 to prevent the sight glass 24 from slipping through the frame opening 30.

The method 500 may, in some embodiments, include positioning a retainer (e.g., the retainer 36) onto the inner side of the mounting frame 26, as depicted in block 506. The retainer 36 is a rigid layer of material configured on the inner side of the mounting frame 26 and affixed thereto to prevent the sight glass 24 from slipping through the flame shield opening 34. For example, the retainer 36 can have a retainer opening (e.g., the retainer opening 40) that at least partially covers a peripheral portion or region of the sight glass 24 within the nacelle 10, such that the sight glass's peripheral edges or edge regions are secured between the retainer 36 and the mounting frame 26 (e.g., the retaining ledge 32 or retaining protrusions thereof).

The method 500 further includes a step of attaching a flame shield (e.g., the flame shield 28 over an inner side of the mounting frame 26 and/or the retainer 36, as depicted in block 508. For example, the flame shield 28 and/or the retainer 36 may be attached and configured to partially cover peripheral edge regions of the sight glass 24. The gasket 38 and the peripheral edge regions of the sight glass 24 may be positioned between the mounting frame 26 and the retainer 36 or the flame shield 28. As described above, the flame shield 28 may be a composite panel made of two or more, 3 or more, or 5 or more composite plies consolidated into a composite laminate.

The method 500 also includes a step of attaching the mounting frame 26 to an inner surface of a panel (e.g., the panel 20) of the fan cowl 12, as depicted in block 510. During this step 510, the sight glass 24 may be aligned with a hole formed through the fan cowl panel 20 and an outer side of the mounting frame 26 may abut the inner surface of the fan cowl panel 20. Any of the fasteners described above or known in the art for fastening of aerospace parts may be used without departing from the scope of the technology described herein.

Although the invention has been described with reference to example embodiments illustrated in the attached drawing figures, it is noted that equivalents may be employed, and substitutions made herein, without departing from the scope of the invention as described and claimed herein.

Having thus described one or more embodiments of the invention, what is claimed as new and desired to be protected by Letters Patent includes the following:

## Claims

1. A sight-viewing structure for an engine nacelle, comprising:
a sight glass that is translucent or semi-translucent;
a mounting frame with an outer side, an inner side opposite the outer side, and a frame opening formed through the mounting frame, wherein the frame opening is covered by the sight glass and the mounting frame is configured for attachment to an inner surface of an engine nacelle at a location with a hole through the engine nacelle, such that the sight glass can be viewed through the hole; and
a flame shield covering the inner side of the mounting frame and partially covering peripheral edge regions of the sight glass, with a flame shield opening formed through the flame shield at a region overlapping the sight glass.

2. The sight-viewing structure of claim 1, wherein the flame shield is a composite panel made of two or more composite plies consolidated into a composite laminate;
wherein the composite panel is optionally made of five or more composite plies and the composite panel is formed of carbon fibers, fiberglass fibers, or ceramic fibers.

3. The sight-viewing structure of claim 1 or 2, wherein a retaining ledge or retaining protrusions at the outer side of the mounting frame are sized and configured around the frame opening to prevent the sight glass from slipping through the frame opening.

4. The sight-viewing structure of any preceding claim, further comprising a retainer between the mounting frame and the flame shield, wherein the retainer is a rigid layer of material configured on the inner side of the mounting frame to prevent the sight glass from slipping through the flame shield opening;
wherein the retainer optionally has a retainer opening with the same area and shape as the flame shield opening.

5. The sight-viewing structure of any preceding claim, further comprising a gasket located within the frame opening and around edges of the sight glass, wherein the gasket is located between the mounting frame and the flame shield.

6. The sight-viewing structure of any preceding claim, further comprising a fan cowl panel with an outer surface, and inner surface, and a cowl opening formed through the fan cowl panel and aligned with the sight glass, wherein the mounting frame and the flame shield are attached to the inner surface of the fan cowl panel, with the outer side of the mounting frame facing the inner surface of the fan cowl panel.

7. An engine nacelle comprising:
a nacelle panel with an outer surface, an inner surface, and a hole formed therethrough;
a sight glass that is translucent or semi-translucent and has peripheral edge regions;
a mounting frame with an outer side, an inner side opposite the outer side, and a frame opening formed through the mounting frame, wherein the sight glass is retained within the and the mounting frame is attached to the inner surface of the nacelle panel at a location such that the sight glass is viewable through the hole; and
a flame shield covering the inner side of the mounting frame and partially covering the peripheral edge regions of the sight glass, with a flame shield opening formed through the flame shield at a region overlapping the sight glass.

8. The engine nacelle of claim 7, wherein the flame shield is a composite panel made of two or more composite plies consolidated into a composite laminate;
wherein the composite panel is optionally made of five or more composite plies made of carbon fiber, fiberglass fiber, or ceramic fiber.

9. The engine nacelle of claim 7 or 8, wherein a retaining ledge at the outer side of the mounting frame is sized and configured around the frame opening to prevent the sight glass from slipping through the frame opening.

10. The engine nacelle of any one of claims 7 to 9, further comprising a retainer between the mounting frame and the flame shield, wherein the retainer is a rigid layer of material configured on the inner side of the mounting frame to prevent the sight glass from slipping through the flame shield opening;
wherein the retainer optionally has a retainer opening with the same area and shape as the flame shield opening.

11. The engine nacelle of any one of claims 7 to 10, further comprising a gasket located within the frame opening and around edges of the sight glass, wherein the gasket is located between the mounting frame and the flame shield.

12. The engine nacelle of any one of claims 7 to 11, further comprising a fan cowl, wherein the nacelle panel is one of a plurality of nacelle panels forming the fan cowl; and/or
wherein the hole through the nacelle panel is configured to provide a line of sight from outside of the engine nacelle into the engine nacelle to a portion of an aircraft engine that displays oil levels when the aircraft engine is mounted within the engine nacelle.

13. The engine nacelle of any one of claims 7 to 12, further comprising a second sight glass that is translucent or semi-translucent located at a second hole formed through the engine nacelle.

14. A method for manufacturing a fan cowl with a sight-viewing structure for providing a line of sight from outside of the fan cowl into the fan cowl to check oil levels of an aircraft engine accessory gearbox without opening the fan cowl, the method comprising:
placing a sight glass that is translucent or semi-translucent into a frame opening of a mounting frame;
attaching a flame shield over an inner side of the mounting frame and partially covering peripheral edge regions of the sight glass;
attaching the mounting frame to an inner surface of a panel of the fan cowl, with the sight glass aligned with a hole formed through the panel and an outer side of the mounting frame abutting the inner surface of the panel.

15. The method of claim 14, wherein the flame shield is a composite panel made of two or more composite plies consolidated into a composite laminate.
